# EUROPÄISCHE PATENTSCHRIFT

(11) **EP 0 814 255 B1**
(45) Veröffentlichungstag und Bekanntmachung des Hinweises auf die Patenterteilung: **27.02.2002**
(21) Anmeldenummer: 97710015.5
(22) Anmeldetag: 20.06.1997
(51) Int. Cl.: F02M 25/07, F01P 3/20, F02M 31/16, F02M 31/20

(54) **Durch einen Verbrennungsmotor antreibbares Kraftfahrzeug**
Vehicle driven by an internal combustion engine
Véhicule actionné par un moteur à combustion interne

(30) Priorität: 22.06.1996 DE 19625036
(43) Veröffentlichungstag der Anmeldung: 29.12.1997
(73) Patentinhaber: MAHLE Filtersysteme GmbH, 70376 Stuttgart (DE); Pierburg Aktiengesellschaft, 41460 Neuss (DE)
(72) Erfinder: Brieden, Thomas, D-71336 Waiblingen (DE); Joepen, Hans-Georg, D-41239 Mönchenglattbach (DE); Möhle, Rolf, D-74626 Bretzfeld (DE)
(74) Vertreter: Patentanwalts-Partnerschaft Rotermund + Pfusch

(56) Entgegenhaltungen:
- EP-A- 0 489 263
- FR-A- 2 506 846
- FR-A- 2 593 903
- US-A- 5 014 910
- PATENT ABSTRACTS OF JAPAN vol. 095, no. 010, 30.November 1995 & JP 07 180620 A (TOYOTA MOTOR CORP), 18.Juli 1995,
- PATENT ABSTRACTS OF JAPAN vol. 018, no. 607 (M-1707), 18.November 1994 & JP 06 229328 A (NISSAN MOTOR CO LTD), 16.August 1994,

## Beschreibung

Die Erfindung betrifft einen Abgas/Kühlmittel-Wärmetauscher für ein Kraftfahrzeug mit den Merkmalen des Oberbegriffs des Anspruchs 1. Die Erfindung betrifft außerdem ein Kraftfahrzeug, das mit einem solchen Abgas/Kühlmittel-Wärmetauscher ausgestattet ist.

Aus der EP 0 489 263 A2 ist ein derartiger Abgas/Kühlmittel-Wärmetauscher bekannt, der sich für einen Einsatz in einem Kraftfahrzeug eignet, das mit einer Abgasrückführung und einem der Kühlung des Verbrennungsmotors dienenden Kühlmittel-Kreislauf ausgestattet ist. In diesem Kühlmittel-Kreislauf sind der Abgas/Kühlmittel-Wärmetauscher sowie ein Luft/Kühlmittel-Kühler angeordnet, wobei der Abgas/Kühlmittel-Wärmetauscher nach dem Verbrennungsmotor und vor dem Luft/Kühlmittel-Kühler im Kühlmittel-Kreislauf angeordnet ist. Der bekannte Abgas/Kühlmittel-Wärmetauscher ist als Doppelrohr ausgebildet, bei dem ein erstes Rohr mit einem zweiten Rohr in wärmeübertragender Verbindung steht, wobei das erste Rohr als Abgasrückführungsleitung dient und das zweite Rohr vom Kühlmittel des Kühlmittel-Kreislaufes durchströmt wird.

Bei modernen Kraftfahrzeugen mit Verbrennungsmotor wird ein Anteil der anfallenden Verbrennungsabgase erneut der Verbrennung zugeführt, um auf diese Weise die Schadstoffemmission des Fahrzeuges zu reduzieren. Es hat sich gezeigt, daß sich die Schadstoffwerte weiter verbessern lassen, wenn das rückgeführte Abgas vor seiner Einleitung in den Motor gekühlt wird. Eine derartige Kühlung des rückgeführten Abgases kann über einen Abgas/Kühlmittel-Wärmetauscher erfolgen.

Darüber hinaus kann ein solcher Abgas/Kühlmittel-Wärmetauscher in der Warmlaufphase des Motors dazu genutzt werden, das Kühlmittel aufzuheizen, um so die Warmlaufphase zu verkürzen. Es ist wichtig, diese Warmlaufphase des Motors möglichst kurz zu gestalten, da der Motor in dieser Betriebsphase einen erhöhten Kraftstoffverbrauch und eine erhöhte Schadstoffemmission aufweist. Die dem Kühlmittel in dieser Betriebsphase zugeführte Wärmeenergie kann bei niedrigen Außentemperaturen außerdem zum Heizen des Fahrgastraumes und zur Windschutzscheibenenteisung ausgenutzt werden.

Diese vorteilhaften Eigenschaften des Abgas/Kühlmittel-Wärmetauschers während der Warmlaufphase des Motors werden auch bei einem aus DE 28 32 571 bekannten Kraftfahrzeug der eingangs genannten Art ausgenutzt. Dort ist ein solcher Abgas/Kühlmittel-Wärmetauscher im Kühlmittel-Kreislauf einem üblichen Luft/Kühlmittel-Kühler nachgeschaltet, der mit dem Fahrtwind oder mit einer künstlich erzeugten Luftströmung beaufschlagt ist. Auf diese Weise kann zwar für das Abgas eine besonders hohe Kühlleistung erzielt werden, jedoch kann es im Dauerlastbetrieb des Motors dazu kommen, daß dem Kühlmittel soviel Wärme zugeführt wird, daß seine für den Motor verbleibende Kühlleistung reduziert ist.

Aus der JP 07 180 620 A ist ein Kraftfahrzeug bekannt, das zur Kühlung eines Motors einen Kühlmittel-Kreislauf aufweist, in dem ein Luft/Kühlmittel-Kühler angeordnet ist. Das Kühlmittel des Kühlmittelkreislaufes wird dabei mit Hilfe einer Kühlmittelpumpe in den Motor bzw. in die Zylinderblökke des Motors eingebracht und zu einem vorderen Kühlmittelanschluß am Zylinderblock des Motors geleitet, von wo aus das aufgeheizte Kühlmittel dem Luft/Kühlmittel-Kühler zugeführt wird. Ein Teil des Kühlmittels wird einem hinteren Kühlmittelanschluß am Zylinderblock des Motors zugeleitet, von wo aus ein Teilstrom des Kühlmittels in einen Abgas/Kühlmittel-Wärmetauscher eingeleitet wird, der zur Kühlung rückgeführter Abgase dient. Das aus dem Abgas/Kühlmittel-Wärmetauscher austretende Kühlmittel wird über mehrere Zusatzleitungen in den Kühlmittel-Kreislauf zurückgeführt. In einer dieser Zusatzleitungen kann zusätzlich ein Heizkörper angeordnet sein. Aufgrund der Vielzahl der verwendeten Kühlmittel-Leitungen ist der Aufbau des KühlSystems bei diesem bekannten Kraftfahrzeug relativ aufwendig.

Aus der JP 06 229 328 A ist ein Kraftfahrzeug bekannt, dessen Motor mit Hilfe eines Kühlmittel-Kreislaufes gekühlt wird, der einen entsprechenden Luft/Kühlmittel-Kühler aufweist. Zwischen dem Motor und dem Luft/Kühlmittel-Kühler wird aus dem Kühlmittel-Kreislauf ein Nebenstrom abgezweigt, der für die Kühlung rückgeführter Abgase einem Abgas/Kühlmittel-Wärmetauscher zugeführt ist. Nach dem der abgezweigte Kühlmittelnebenstrom den Abgas/Kühlmittel-Wärmetauscher durchströmt hat, wird dieser Nebenstrom dem Hauptstrom des Kühlmittel-Kreislaufes vor dem Luft/Kühlmittel-Kühler wieder zugeführt. Um die Temperatur des Kühlmittels im Nebenstrom zu senken, ist vor dem Abgas/Kühlmittel-Wärmetauscher im Nebenstrom ein Lufteinlaßregler angeordnet, der durch das abgezweigte Kühlmittel erwärmt wird.

Bei einem Fahrzeug der eingangs genannten Art werden eine Vielzahl von Leitungen benötigt, zum Beispiel für die Abgasrückführung, für die Kühlmittelversorgung des Abgas/Kühlmittel-Wärmetauschers, für die Kühlmittelversorgung des Kraftstoff-Heizers, für die Kühlmittelversorgung des Kraftstoff-Kühlers, für die Kühlmittelversorgung der Fahrgastraumheizung usw.. Auf diese Weise wird der gesamte Aufbau im Motorraum unübersichtlich, eine Montage zeitaufwendig und das Kühlsystem anfällig für Störungen, wie zum Beispiel durch altersbedingte Sprödigkeit und Verrottung der Leitungen sowie durch Marder, die bevorzugt Kühlmittel-Leitungen beschädigen.

Die vorliegende Erfindung beschäftigt sich mit dem Problem, für einen Abgas/Kühlmittel-Wärmetauscher der eingangs genannten Art eine Ausführungsform anzugeben, die eine konstruktiv einfache Anordnung der miteinander kommunizierenden Aggregate und der zugehörigen Leitungen mit konstruktiv einfachen Mitteln ermöglicht.

Dieses Problem wird erfindungsgemäß durch einen Abgas/Kühlmittel-Wärmetauscher mit den Merkmalen des Anspruchs 1 gelöst.

Durch die erfindungsgemäße Ausgestaltung des Abgas/Kühlmittel-Wärmetauschers und des zumindest einen daran angeformten Aggregates (bzw. wesentlicher Bestandteile dieses Aggregates) sowie der zugehörigen Verbindungsleitungen als einheitliches Bauteil erhält der Abgas/Kühlmittel-Wärmetauscher einen konstruktiv einfachen Aufbau und der Motorraum bleibt übersichtlich. Außerdem ist nur ein Bauteil zu montieren, das gegebenenfalls mit Kraftstoff-Leitungen und Stromversorgungsleitungen oder dergleichen verbunden werden muss. Das einheitliche Bauteil kann am Austritt des Kühlmittels wiederum einen Anschluß für eine Kühlmittel-Leitung aufweisen, der mit dem Fahrgastraum-Heizer in Verbindung steht. Auf diese Weise wird für den Kühlmittel-Kreislauf, obwohl darin der Abgas/Kühlmittel-Wärmetauscher, ein Wärmetauscher für die Kraftstoffkühlung, ein Wärmetauscher für die Kraftstofferwärmung und ein Zusatzheizgerät enthalten sein können, weder ein zusätzliches Bauteil, noch eine zusätzliche Kühlmittel-Leitung benötigt. Die Vorteile einer solchen Ausgestaltung für die Montage liegen auf der Hand.

Durch die erfindungsgemäße Ausgestaltung des Abgas/Kühlmittel-Wärmetauschers kann außerdem der dem Motor zugeführte Kraftstoff vorgewärmt werden. Eine derartige Kraftstoffvorwärmung ist insbesondere bei tiefen Außentemperaturen bei Dieselmotoren von Bedeutung, da es beim Diesel-Kraftstoff zur Ausscheidung von Paraffin kommen kann, wodurch eine Verstopfung des Kraftstoff-Filters bzw. der Kraftstoff-Einspritzanlage erfolgen kann. Darüber hinaus wird zur Erhöhung der Wirtschaftlichkeit eines Verbrennungsmotors auch bei höheren Außentemperaturen eine Temperierung des der Verbrennung zugeführten Kraftstoffes erwünscht. Eine auf diese Weise erreichte gezielte Erhöhung der Kraftstoffflüchtigkeit bewirkt sowohl bei Diesel- als auch bei Benzinmotoren eine Verbesserung des Zünd- und Abbrandverhaltens und somit eine bessere Kraftstoffausnutzung bzw. einen verminderten Kraftstoffverbrauch. Die erfindungsgemäße Anordnung des Kraftstoff-Heizers nach dem Abgas/Kühlmittel-Wärmetauscher bewirkt, daß im Bedarfsfall während der Warmlaufphase möglichst viel der vom Abgas in das Kühlmittel übertragenen Wärmeenergie in den Kraftstoff übertragen werden kann, so daß sich beispielsweise bei einem Dieselmotor der Kraftstoff-Filter während der Startphase nicht zusetzen kann.

Bei bevorzugten Ausführungsformen des Abgas/Kühlmittel-Wärmetauschers nach der Erfindung können entsprechend den Ansprüchen 2 bis 6 weitere Elemente eines Kühlmittel-Kreislaufes, wie zum Beispiel Zusatzheizgerät, Kraftstoff-Kühler, in den Kühlmittel-Kreislauf integriert werden, ohne daß zusätzliche Kühlmittel-Leitungen benötigt werden.

Bei einer bevorzugten Ausführung des Doppelrohres nach der Erfindung besteht zumindest das außenliegende zweite Rohr aus Metall, so daß die vorbeschriebene Anfälligkeit für Alterssprödigkeit, Marderbiß oder dergleichen entfallen.

Das der Erfindung zugrunde liegende Problem wird auch durch ein Kraftfahrzeug mit den Merkmalen des Anspruchs 7 gelöst. Durch den Einbau des erfindungsgemäßen Abgas/Kühlmittel-Wärmetauschers in ein Kraftfahrzeug, ergibt sich im Motorraum des Kraftfahrzeugs ebenso eine konstruktiv einfache und übersichtliche Anordnung der miteinander kommunizierenden Aggregate sowie der dazu gehörenden Leitungen.

um zur Verkürzung der Warmlaufphase des Motors dem Kühlmittel noch mehr Wärmeenergie zuführen zu können, wird im Kühlmittel-Kreislauf entsprechend Anspruch 8 ein Zusatzheizgerät angeordnet. In einem solchen Zusatzheizgerät kann die Wärmeenergie beispielsweise mittels einer elektrischen Heizung in das Kühlmittel eingeleitet werden. Das Zusatzheizgerät ist erfindungsgemäß vor dem Kraftstoff-Heizer angeordnet, so daß es insbesondere auch zur Vorwärmung des Kraftstoffes beitragen kann. Außerdem kann die für eine Fahrgastraumheizung und/oder Fensterenteisungseinrichtung zur Verfügung stehende Wärmemenge erhöht werden.

Es ist üblich dem Verbrennungsmotor mehr Kraftstoff zuzuführen, als dieser in "normalen" Betriebsphasen benötigt, um stets einen erhöhten Kraftstoffbedarf sofort befriedigen zu können. Der folglich in den "normalen" Betriebsphasen anfallende überschüssige Kraftstoff wird in den Kraftstoff-Tank des Fahrzeuges zurückgeführt.

Bei modernen Verbrennungsmotoren, die mit einer Einspritzanlage ausgestattet sind, kann insbesondere bei der Verwendung einer Hochdruck-Einspritzpumpe der Kraftstoff so hohe Temperaturen erreichen, daß überschüssiger Kraftstoff nicht ungekühlt in den Kraftstoff-Tank zurückfließen darf. Entsprechend einer Ausgestaltung nach Anspruch 9 gelingt es, den zurückfließenden Kraftstoff auf eine unkritische Temperatur zu kühlen. Dazu reicht im Dauerbetrieb einerseits das Wärmeaufnahmevermögen des vom Motor kommenden "heißen" Kühlmittels noch aus, andererseits kann danach im Kühlmittel-Kreislauf bzw. vom Kühlmittel regelmäßig noch genügend Wärme aufgenommen werden, um auch das rückgeführte Abgas im vorzugsweise nachgeschalteten Abgas/Kühlmittel-Wärmetauscher auf die erforderliche Temperatur zu kühlen. Darüber hinaus dient der Kraftstoff-Kühler während der Warmlaufphase als zusätzlicher Kühlmittel-Heizer, der dem Kühlmittel Wärme zuführt, die anschließend zum Heizen des Fahrgastinnenraumes, des Kraftstoffes, des Motors oder zum Enteisen verwendet werden kann, so daß sich die Warmlaufphase verkürzt.

Weitere wichtige Merkmale und Vorteile der Erfindung ergeben sich aus den nachfolgend beschriebenen Ausführungsbeispielen.

Es zeigen, jeweils schematisch,
- Fig. 1: eine Prinzipdarstellung eines Ausschnitts eines Kühlmittel-Kreislaufes mit einem Abgas/Kühlmittel-Wärmetauscher in einem durch einen Verbrennungsmotor antreibbaren, im übrigen nicht dargestellten Kraftfahrzeug,
- Fig. 2: eine Prinzipdarstellung wie in Fig. 1, jedoch ohne den erfindungsgemäß vorgeschlagenen Aufbau des Kühlmittel-Kreislaufes,
- Fig. 3: eine perspektivische Ansicht eines erfindungsgemäßen Abgas/Kühlmittel-Wärmetauschers und
- Fig. 4: eine Seitenansicht auf den Abgas/Kühlmittel-Wärmetauscher aus Fig. 3.

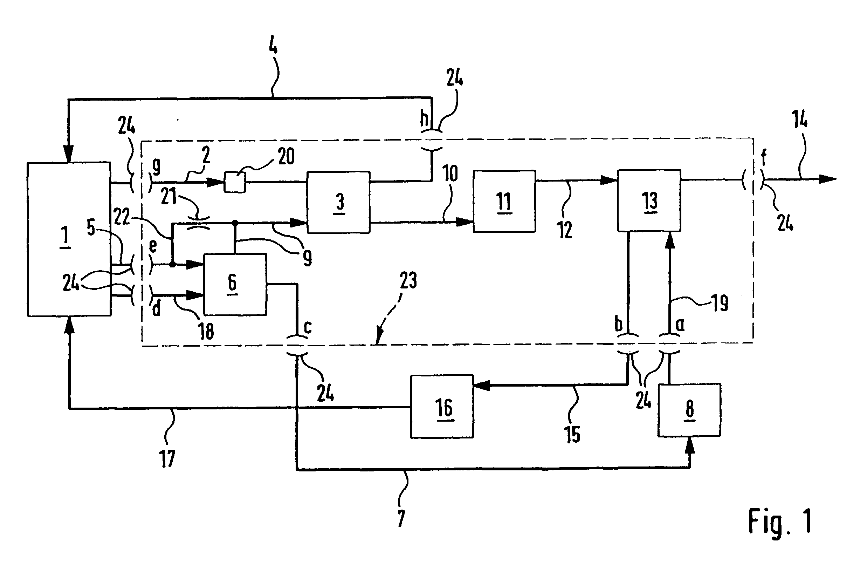

Entsprechend Fig. 1 tritt ein einem Verbrennungsmotor 1 zugeführtes Kühlmittel über eine Kühlmittel-Leitung 5 aus dem Motor 1 eines im übrigen nicht dargestellten Kraftfahrzeuges aus. Über die Kühlmittel-Leitung 5 wird das "heiße" Kühlmittel einem Kraftstoff-Kühler 6 zugeführt und verläßt diesen über eine Kühlmittel-Leitung 9 in Richtung auf einen Abgas/Kühlmittel-Wärmetauscher 3. Statt den Kraftstoff-Kühler 6 zu durchströmen kann das Kühlmittel über einen Bypass 22, am Kraftstoff-Kühler 6 vorbei, direkt in die Kühlmittel-Leitung 9 eingespeist werden. Dabei regelt beispielsweise eine Drossel 21 im Bypass 22 die Kühlmittelanteile, die durch den Bypass 22 bzw. durch den Kraftstoff-Kühler 6 flieβen. In entsprechender Weise kann zur Regelung der Durchflußmenge an Kühlmittel durch den Kraftstoff-Kühler 6 anstelle der Drossel 21 auch ein Thermostat oder dergleichen verwendet werden.

Dem Verbrennungsmotor 1 wird üblicherweise mehr Kraftstoff zugeführt, als dieser für seinen laufenden Betrieb benötigt, um zum einen die Kraftstoffpumpe zu kühlen und um zum anderen beispielsweise bei einem Überholvorgang rasch die für eine hohe Motorleistung erforderliche größere Kraftstoffmenge zur Verfügung stellen zu können. Bei modernen Fahrzeugen wird daher insbesondere über eine Einspritzanlage dem Motor 1 stets mehr Kraftstoff zugeführt, als er im Vollastbetrieb mindestens benötigt. Im Normalbetrieb wird dabei der überschüssige Kraftstoff durch eine Kraftstoff-Leitung 18 abgeführt und über eine Kraftstoff-Leitung 7 einem Kraftstoff-Tank 8 zugeführt. Insbesondere bei der Verwendung einer Hochdruck-Einspritzpumpe kann aber der aus dem Motor 1 zurückfließende überschüssige Kraftstoff eine so hohe Temperatur aufweisen, daß er aus Sicherheitsgründen nicht ohne weiteres in den Kraftstoff-Tank 8 zurückgeleitet werden kann. Um diese gefährlich hohen Temperaturen des zurückfließenden Kraftstoffes abzusenken, wird er über die Kraftstoff-Leitung 18 zunächst dem Kraftstoff-Kühler 6 zugeführt, worin er auf eine ungefährliche Temperatur abgekühlt wird. Anschließend kann er über die Kraftstoff-Leitung 7 dem Kraftstoff-Tank 8 zugeführt werden. Dabei hat der aus dem Motor 1 austretende überschüssige Kraftstoff eine deutlich höhere Temperatur als das aus dem Motor 1 austretende "heiße" Kühlmittel, so daß das Kühlmittel eine ausreichende Wärmemenge aufnehmen kann, um den überschüssigen Kraftstoff auf eine geeignete Temperatur abzukühlen.

Um die Schadstoff-Emmission des Verbrennungsmotors 1 zu verringern, wird ein Anteil des bei der Kraftstoffverbrennung anfallenden Abgases über eine Abgasrückführung erneut der Verbrennung zugeführt. Dabei hat sich herausgestellt, daß eine Abkühlung des Abgases bevor es der Verbrennung zugeführt wird, die Schadstoffwerte zusätzlich verbessert. Zu diesem Zweck wird der aus dem Motor 1 austretende für die Abgasrückführung bestimmte Abgasanteil über eine Abgas-Leitung 2 dem Abgas/Kühlmittel-Wärmetauscher 3 zugeführt.

Zwischen Motor 1 und Abgas/Kühlmittel-Wärmetauscher 3 kann zusätzlich ein Abgas-Filter 20 im Abgasstrom angeordnet sein. Über eine Abgas-Leitung 4 wird dann das abgekühlte und gegebenenfalls gefilterte Abgas der Verbrennung erneut zugeführt. Die Abgasrückführung besteht im beschriebenen Ausführungsbeispiel folglich aus der Abgas-Leitung 2, dem Abgas-Filter 20, dem Abgas/Kühlmittel-Wärmetauscher 3 und der Abgas-Leitung 4.

Nach dem Verlassen des Kraftstoff-Kühlers 6 bzw. über den Bypass 22 wird das gegebenenfalls durch den Kraftstoff zusätzlich erwärmte Kühlmittel durch die Kühlmittel-Leitung 9 dem Abgas/Kühlmittel-Wärmetauscher 3 zugeführt. Dort erfolgt gegebenenfalls eine weitere Erwärmung des Kühlmittels durch das zurückgeführte Abgas. Das Kühlmittel wird nach dem Abgas/Kühlmittel-Wärmetauscher 3 über eine Kühlmittel-Leitung 10 einem Zusatzheizgerät 11 zugeführt. Insbesondere in der Warmlaufphase des Motors 1 wird über das Zusatzheizgerät 11 dem Kühlmittel Wärmeenergie zugeführt.

Das Zusatzheizgerät 11 kann beispielsweise elektrisch betrieben werden. Dabei wird eine elektronische Steuerung bevorzugt, die elektrisch betriebene Heizelemente so regelt, daß sich an deren Kontakt- bzw. Wärmeübertragungsflächen im Kühlmittel keine Siedeblasen ausbilden können, wodurch eine Optimierung der Energiezufuhr in das Kühlmittel erreicht wird. Auf diese Weise kann auf elektrischem Wege eine große Menge an Wärmeenergie dem Kühlmittelstrom zugeführt werden. Die dazu benötigte elektrische Energie kann beispielsweise über eine größere Lichtmaschine bereitgestellt werden. Eine solche Lichtmaschine entwickelt bei einer großen Leistungsabnahme so viel Wärmeenergie, daß eine Kühlung der Lichtmaschine erforderlich sein kann. Für eine solche Kühlung bietet sich die Verwendung des vorhandenen Kühlmittel-Kreislaufes an, wodurch dem Kühlmittel-Kreislauf zusätzliche Wärmeenergie zugeführt wird. Außerdem benötigt eine stark belastete Lichtmaschine zu ihrem Betrieb eine erhöhte Motorleistung, so daß auch dieser mehr Wärme entwickelt, die wiederum in den Kühlmittel-Kreislauf eingespeist wird. Auf diese Weise kann durch das Zusatzheizgerät 11 dem Kühlmittel Wärmeenergie zugeführt werden, die bis zu dreimal größer ist als die elektrische Energie, die das elektrisch betriebene Zusatzheizgerät 11 zum Heizen benötigt.

Nach dem Zusatzheizgerät 11 wird das Kühlmittel über eine Kühlmittel-Leitung 12 einem Kraftstoff-Heizer 13 zugeführt. Der Kraftstoff-Heizer 13 dient dazu, den aus dem Kraftstoff-Tank 8 über eine Kraftstoff-Leitung 19 dem Kraftstoff-Heizer 13 zugeführten Kraftstoff zu temperieren. Insbesondere dient ein Kraftstoff-Heizer 13 während der Warmlaufphase eines Dieselmotors dazu, bei niedrigen Außentemperaturen eine Paraffinausscheidung in einem Kraftstoff-Filter 16 zu verhindern. Der temperierte Kraftstoff verläßt den Kraftstoff-Heizer 13 über eine Kraftstoff-Leitung 15, die ihn dem Kraftstoff-Filter 16 zuführt, von wo aus er über eine Kraftstoff-Leitung 17 dem Verbrennungsmotor 1 zugeführt wird.

Nach dem Verlassen des Kraftstoff-Heizers 13 kann das Kühlmittel über eine Kraftstoff-Leitung 14 beispielsweise einer nicht dargestellten Fahrgastraumheizung zugeführt werden.

Sämtliche Elemente, die entsprechend Fig. 1 innerhalb eines gestrichelter Linie dargestellten Rechtecks liegen, lassen sich zu einer Baugruppe 23 zusammenfassen, die als Ganzes im Motorraum des Kraftfahrzeuges montiert werden kann. Dabei sind die Verbindungsstellen 24a bis 24h, die auch als Anschlüsse oder Schnittstellen bezeichnet werden können, in Fig. 1 mit Klammersymbolen angedeutet.

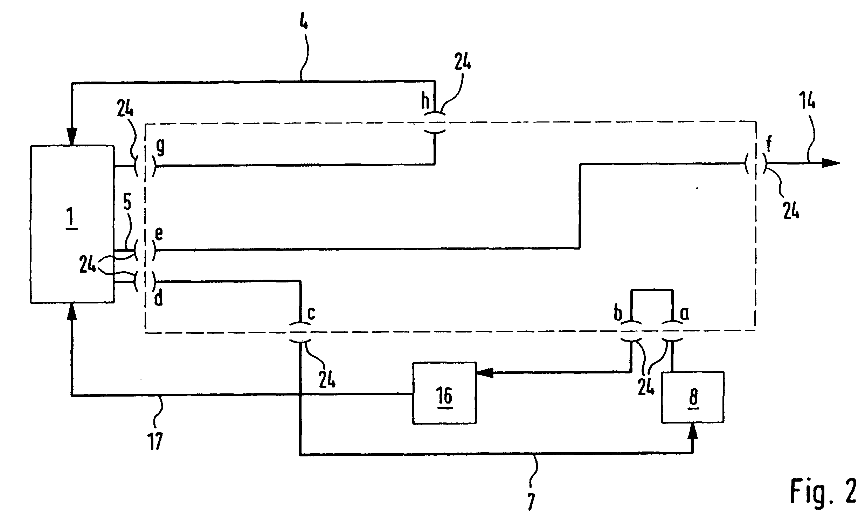

Die Bedeutung dieser komplett montierbaren Baugruppe 23 läßt sich am besten veranschaulichen, wenn entsprechend Fig. 2 zunächst von einem Kraftfahrzeug ausgegangen wird, bei dem die erfindungsgemäße Anordnung der Bestandteile des Kühlmittel-Kreislaufes innerhalb des gestrichelten Rechtecks fehlen. Entsprechend Fig. 2 sind dann die Schnittstellen 24a und 24b innerhalb des Rechtecks über eine Kraftstoff-Leitung verbunden, ebenso die Schnittstellen 24c und 24d. Auf diese Weise wird eine übliche Kraftstoff-Zuführung aus dem Kraftstoff-Tank 8 über den Kraftstoff-Filter 16 zum Motor 1 sowie die übliche Rückführung des überschüssigen Kraftstoffes vom Motor 1 zum Kraftstoff-Tank 8 ausgebildet. Die Verbindung der Schnittstellen 24e und 24f ergibt eine übliche Rückleitung des "heißen" Kühlmittels beispielsweise über die eine Fahrgastraumheizung zu einem Luft/Kühlmittel-Kühler. Die Verbindung der Schnittstellen 24g und 24h bildet dann eine herkömmliche Abgasrückführung ohne Abgas-Kühlung aus.

Beim Vergleich der Fig. 1 und Fig. 2 wird deutlich, daß bei der Montage der die erfindungsgemäße Anordnung der Kühlmittel-Kreislaufbestandteile (wie zum Beispiel Abgas-Filter 20, Abgas/Kühlmittel-Wärmetauscher 3, Kraftstoff-Kühler 6, Zusatzheizgerät 11, Kraftstoff-Heizer 13) enthaltende Baugruppe 23 keine zusätzlichen Leitungen für den Kühlmittel-Kreislauf benötigt werden.

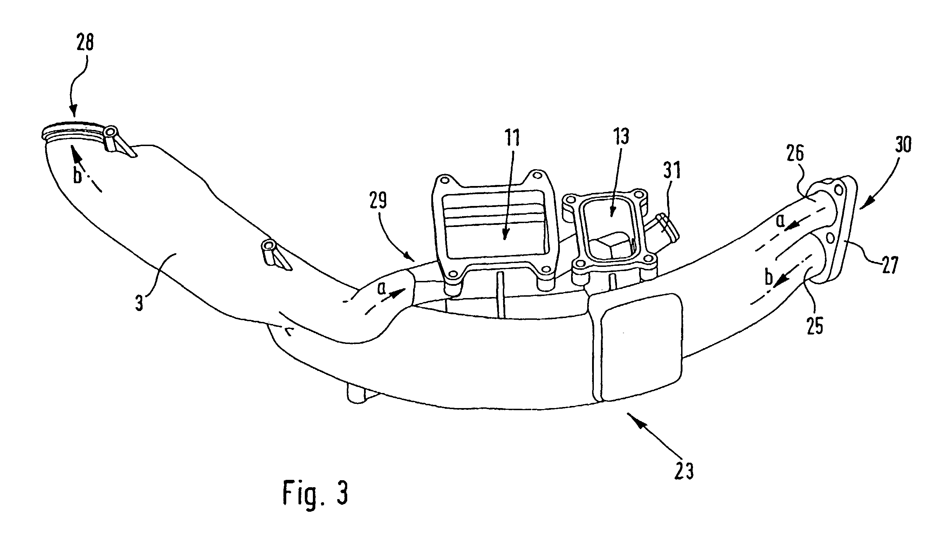

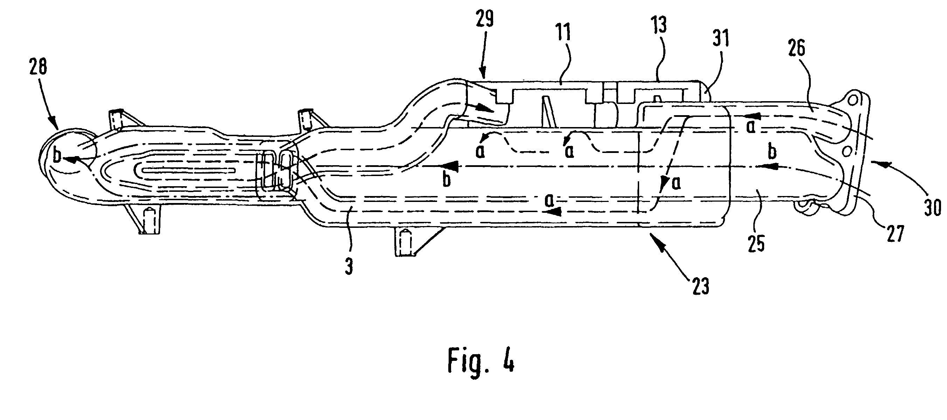

Entsprechend den Fig. 3 und 4 kann der erfindungsgemäße Abgas/Kühlmittel-Wärmetauscher 3 so ausgebildet sein, daß dieser die in Fig. 1 gezeigte Baugruppe 23 ausbildet. Im dargestellten Ausführungsbeispiel ist der Abgas/Kühlmittel-Wärmetauscher 3 in Form eines Doppelrohres aufgebaut, das einen leicht gekrümmten Verlauf aufweist. Diese gekrümmte Formgebung ermöglicht eine Abgasrückführung auf kurzem Weg entlang dem Motorblock. Bei der Ausbildung als Doppelrohr, bei dem ein erstes Rohr 25 von einem zweiten Rohr 26 im wesentlichen über seine gesamte Länge eingefaßt ist, kann ein guter Wärmeaustausch gewährleistet werden. Ein Flansch 27 am Eintrittsbereich 30 der Rohre 25 und 26 beinhaltet die Anschlüsse für den aus dem Motor 1 kommenden Kühlmittelstrom (Pfeil a) und den rückzuführenden Abgasstrom (Pfeil b). Dabei ist das im wesentlichen innenliegende erste Rohr 25 der Abgasrückführung zugeordnet und das dieses im wesentlichen einfassende zweite Rohr 26 dem Kühlmittel-Kreislauf zugeordnet. Das erste Rohr 25 ist an seinem Austritt 28 über ein nicht gezeigtes Koppelglied an eine ebenfalls nicht dargestellte Abgasmischvorrichtung angeschlossen, welche die Zufuhr des zurückgeführten Abgases für die Verbrennung reguliert. Das Koppelglied dient hauptsächlich zum Ausgleich von Wärmeausdehnungen zwischen der Abgasrückführung bzw. dem Abgas/Kühlmittel-Wärmetauscher und der an einer Luftzuführung für den Motor 1 montierten Abgasmischvorrichtung. Auf diese Weise bildet das erste Rohr 25 im wesentlichen die Abgasrückführung.

Wie in Fig. 4 zu erkennen ist, wird das Kühlmittel im zweiten Rohr 26 kurz nach dem Flansch 25 so geleitet, daß es das erste Rohr 25 nahezu vollständig umspült. Auf diese Weise wird ein hoher Wärmeaustausch erzielt. Im in Strömungsrichtung hinteren Bereich des Doppelrohres erfolgt eine Umleitung des zweiten Rohres 26 derart, daß ein Austrittsbereich 29 des zweiten Rohres 26 etwa in der Mitte des Doppelrohres auf dessen Oberseite angeordnet ist. Wie aus den Fig. 3 und 4 zu entnehmen ist, mündet der Austrittsbereich 29 des zweiten Rohres 26 im Zusatzheizgerät 11, das seinerseits mit dem Kraftstoff-Heizer 13 kommunizierend verbunden ist. Die Bauteile des Zusatzheizgerätes 11 und des Kraftstoff-Heizers 13 sind so weit wie möglich einheitlich mit dem Doppelrohr bzw. mit dem Abgas/Kühlmittel-Wärmetauscher 3 geformt. Auf diese Weise wird ein in einem Arbeitsschritt herstellbares komplexes Bauteil gebildet. Zusätzlich ist am Kraftstoff-Heizer 13 ein als Stutzen ausgebildeter Anschluß 31 für die Kühlmittel-Leitung 14 angeformt. In entsprechender Weise können auch ein Abgas-Filter (vgl. Fig. 1) und/oder ein Kraftstoff-Kühler 6 (vgl. Fig. 1) bzw. Bauteile dieser Aggregate am Doppelrohr des Abgas/Kühlmittel-Wärmetauschers 3 angeformt bzw. mit diesem einheitlich herstellbar sein. Auf diese Weise wird ein komplexer Abschnitt eines Kühlmittel-Kreislaufes ausgebildet, ohne daß zusätzliche Kühlmittel-Leitungen benötigt werden, wobei lediglich eine herkömmliche Abgasrückführungsleitung durch die erfindungsgemäß aufgebaute Baugruppe 23 bzw. durch den erfindungsgemäß ausgestalteten Abgas/Kühlmittel Wärmetauscher 3 ersetzt wird.

## Patentansprüche

1. Abgas/Kühlmittel-Wärmetauscher geeignet für ein Kraftfahrzeug, das mit einer Abgasrückführung und einem der Kühlung eines Verbrennungsmotors (1) dienenden Kühlmittel-Kreislauf ausgestattet ist, in dem der Abgas/Kühlmittel-Wärmetauscher (3) und ein Luft/Kühlmittel-Kühler angeordnet sind, wobei der Abgas/Kühlmittel-Wärmetauscher (3) nach dem Verbrennungsmotor (1) und vor dem Luft/Kühlmittel-Kühler im Kühlmittel-Kreislauf angeordnet ist, wobei der Abgas/Kühlmittel-Wärmetauscher (3) als Doppelrohr ausgebildet ist, bei dem ein erstes Rohr (25) mit einem zweiten Rohr (26) in wärmeübertragender Verbindung steht, wobei das erste Rohr (25) als Abgasrückführungsleitung dient und das zweite Rohr (26) vom Kühlmittel des Kühlmittel-Kreislaufes durchströmt wird,
**dadurch gekennzeichnet,**
**dass** ein Kraftstoff-Heizer (13) im Kühlmittel-Kreislauf nach dem Abgas/Kühlmittel-Wärmetauscher (3) und vor dem Luft/Kühlmittel-Kühler angeordnet ist, wobei der Kraftstoff-Heizer (13) an eine Kraftstoff-Zuführung angeschlossen ist, die Kraftstoff von einem Kraftstoff-Tank (8) zum Verbrennungsmotor (1) transportiert, wobei am Doppelrohr Bauteile eines Kraftstoff-Heizers (13) so angeformt sind, dass der Kraftstoff-Heizer (13) am Austrittsbereich (29) des zweiten Rohres (26) in den Kühlmittel-Kreislauf integrierbar ist.

2. Abgas/Kühlmittel-Wärmetauscher nach Anspruch 1,
**dadurch gekennzeichnet,**
**dass** das zweite Rohr (26) das erste Rohr (25) im wesentlichen entlang seiner gesamten Länge umschließt.

3. Abgas/Kühlmittel-Wärmetauscher nach Anspruch 1 oder 2,
**dadurch gekennzeichnet,**
**dass** am Doppelrohr Bauteile eines Zusatzheizgerätes (11) so angeformt sind, dass das Zusatzheizgerät (11) am Austrittsbereich (29) des zweiten Rohres (26), vor oder nach dem Kraftstoff-Heizer (13), in den Kühlmittel-Kreislauf integrierbar ist.

4. Abgas/Kühlmittel-Wärmetauscher nach einem der Ansprüche 1 bis 3,
**dadurch gekennzeichnet,**
**dass** am Austrittsbereich (29) des zweiten Rohres (26) oder am Austrittsbereich des Kraftstoff-Heizers (13), ein Anschluß (31) für eine Kühlmittel-Leitung (14) angeformt ist.

5. Abgas/Kühlmittel-Wärmetauscher nach einem der Ansprüche 1 bis 4,
**dadurch gekennzeichnet,**
**dass** am Doppelrohr Bauteile eines Kraftstoff-Kühlers (6) so angeformt sind, dass der Kraftstoff-Kühler (6) am Eintrittsbereich (30) des zweiten. Rohres (26) in den Kühlmittel-Kreislauf integrierbar ist.

6. Abgas/Kühlmittel-Wärmetauscher nach einem der Ansprüche 1 bis 5,
**dadurch gekennzeichnet,**
**dass** am Doppelrohr Bauteile eines Abgas-Filters (20) so angeformt sind, dass der Abgas-Filter (20) im Eintrittsbereich (30) des ersten Rohres (25) in die Abgasrückführung integriert ist.

7. Durch einen Verbrennungsmotor antreibbares Kraftfahrzeug mit einem Abgas/Kühlmittel-Wärmetauscher (3) nach Anspruch 1.

8. Kraftfahrzeug nach Anspruch 7,
**dadurch gekennzeichnet,**
**dass** ein Zusatzheizgerät (11) nach dem Abgas/Kühlmittel-Wärmetauscher (3) und vor dem Kraftstoff-Heizer (13) im Kühlmittel-Kreislauf angeordnet ist.

9. Kraftfahrzeug nach Anspruch 7 oder 8,
**dadurch gekennzeichnet,**
**dass** ein Kraftstoff-Kühler (6) nach dem Verbrennungsmotor (1) und vor dem Luft/Kühlmittel-Kühler im Kühlmittel-Kreislauf angeordnet ist, wobei der Kraftstoff-Kühler (6) an eine Kraftstoff-Rückführung angeschlossen ist, die überschüssigen Kraftstoff zum Kraftstoff-Tank (8) transportiert.

10. Kraftfahrzeug nach Anspruch 9,
**dadurch gekennzeichnet,**
**dass** der Kraftstoff-Kühler (6) vor dem Abgas/Kühlmittel-Wärmetauscher (3) im Kühlmittel-Kreislauf angeordnet ist.

11. Kraftfahrzeug nach Anspruch 9 oder 10,
**dadurch gekennzeichnet,**
**dass** im Kühlmittel-Kreislauf ein den Kraftstoff-Kühler (6) überbrückender Bypass (22) vorgesehen ist, der Regelungsmittel (21) enthält, mit denen die Durchflußmenge eines Kühlmittels durch den Kraftstoff-Kühler (6) regelbar ist.

12. Kraftfahrzeug nach Anspruch 11,
**dadurch gekennzeichnet,**
**dass** als Regelungsmittel eine Drossel (21) und/oder ein Thermostat vorgesehen sind.

13. Kraftfahrzeug nach den Ansprüchen 7 bis 12,
**dadurch gekennzeichnet,**
**dass** im Kühlmittel-Kreislauf das Kühlmittel nacheinander zumindest den Verbrennungsmotor (1), den Kraftstoff-Kühler (6), den Abgas/Kühlmittel-Wärmetauscher (3), das Zusatzheizgerät (11) und den Kraftstoff-Heizer (13) durchströmt.

## Claims

1. Exhaust gas/coolant heat exchanger suitable for a motor vehicle, which is equipped with an exhaust gas recirculation system and a coolant circuit serving to cool an internal-combustion engine (1), in which the exhaust gas/coolant heat exchanger (3) and an air/coolant radiator are arranged, the waste gas/coolant heat exchanger (3) being arranged downstream of the internal-combustion engine (1) and upstream of the air/coolant radiator in the coolant circuit, the waste gas/coolant heat exchanger (3) being designed as a double pipe in which a first pipe (25) is connected in a heat-transmitting manner to a second pipe (26), the first pipe (25) serving as exhaust gas recirculation, pipe and coolant from the coolant circuit flowing through the second pipe (26), **characterised in that** a fuel heater (13) is arranged in the coolant circuit downstream of the exhaust gas/coolant heat exchanger (3) and upstream of the air/coolant radiator, the fuel heater (13) being connected to a fuel supply which conveys fuel from a fuel tank (8) to the internal-combustion engine (1), components of a fuel heater (13) being formed on the double pipe in such a way that the fuel heater (13) can be integrated at the outlet region (29) of the second pipe (26) into the coolant circuit.

2. Exhaust gas/coolant heat exchanger according to claim 1, **characterised in that** the second pipe (26) surrounds the first pipe (25) substantially along its entire length.

3. Exhaust gas/coolant heat exchanger according to claim 1 or 2, **characterised in that** components of an additional heating apparatus (11) are formed on the double pipe in such a way that the additional heating apparatus (11) can be integrated at the outlet region (29) of the second pipe (26), upstream or downstream of the fuel heater (13), in the coolant circuit.

4. Exhaust gas/coolant heat exchanger according to any of claims 1 to 3, **characterised in that** a connection (31) for a coolant line (14) is formed at the outlet region (29) of the second pipe (26) or at the outlet region of the fuel heater (13).

5. Exhaust gas/coolant heat exchanger according to any of claims 1 to 4, **characterised in that** components of a fuel cooler (6) are formed on the double pipe in such a way that the fuel cooler (6) can be integrated at the inlet region (30) of the second pipe (26) in the coolant circuit.

6. Exhaust gas/coolant heat exchanger according to any of claims 1 to 5, **characterised in that** components of an exhaust gas filter (20) are formed on the double pipe in such a way that the exhaust gas filter (20) is integrated in the inlet region (30) of the first pipe (25) into the exhaust gas recirculation system.

7. Motor vehicle which can be driven by an internal-combustion engine with an exhaust gas/coolant heat exchanger (3) according to claim 1.

8. Motor vehicle according to claim 7, **characterised in that** an additional heating apparatus (11) is arranged downstream of the exhaust gas/coolant heat exchanger (3) and upstream of the fuel heater (13) in the coolant circuit.

9. Motor vehicle according to claim 7 or 8, **characterised in that** a fuel cooler (6) is arranged downstream of the internal-combustion engine (1) and upstream of the air/coolant radiator in the coolant circuit, the fuel cooler (6) being connected to a fuel recirculation system which conveys excess fuel to the fuel tank (8).

10. Motor vehicle according to claim 9, **characterised in that** the fuel cooler (6) is arranged upstream of the exhaust gas/coolant heat exchanger (3) in the coolant circuit.

11. Motor vehicle according to claim 9 or 10, **characterised in that** a by-pass (22) by-passing the fuel cooler (6) is provided in the coolant circuit, which by-pass (22) contains control means (21) with which the flow of a coolant through the fuel cooler (6) can be controlled.

12. Motor vehicle according to claim 11, **characterised in that** a throttle (21) and/or a thermostat are provided as control means.

13. Motor vehicle according to any of claims 7 to 12, **characterised in that** in the coolant circuit the coolant flows successively through at least the internal-combustion engine (1), the exhaust gas/coolant heat exchanger (3), the additional heating apparatus (11) and the fuel heater (13).

## Revendications

1. Échangeur thermique gaz d'échappement/agent réfrigérant adapté à un véhicule automobile qui est équipé d'un recyclage des gaz d'échappement et d'un circuit d'agent réfrigérant servant au refroidissement d'un moteur à combustion interne (1), dans lequel sont disposés l'échangeur thermique gaz d'échappement/agent réfrigérant (3) et un refroidisseur air/agent réfrigérant, l'échangeur thermique gaz d'échappement/agent réfrigérant (3) étant disposé en aval du moteur à combustion interne (1) et en amont du refroidisseur air/agent réfrigérant dans le circuit d'agent réfrigérant, l'échangeur thermique gaz d'échappement/agent réfrigérant (3) étant réalisé sous forme de double tube, dans lequel un premier tube (25) est en liaison de transfert thermique avec un second tube (26), le premier tube (25) servant de conduite de recyclage des gaz d'échappement et le second tube (26) étant traversé par l'agent réfrigérant du circuit d'agent réfrigérant,
**caractérisé en ce**
**qu'**un réchauffeur de carburant (13) est disposé dans le circuit d'agent réfrigérant en aval de l'échangeur thermique gaz d'échappement/agent réfrigérant (3) et en amont du refroidisseur air/agent réfrigérant, le réchauffeur de carburant (13) étant raccordé à une arrivée de carburant qui transporte du carburant d'un réservoir de carburant (8) au moteur à combustion interne (1), des composants d'un réchauffeur de carburant (13) étant conformés sur le double tube de telle sorte que le réchauffeur de carburant (13) peut être intégré au circuit d'agent réfrigérant sur la zone de sortie (29) du second tube (26).

2. Échangeur thermique gaz d'échappement/agent réfrigérant suivant la revendication 1,
**caractérisé en ce**
**que** le second tube (26) entoure le premier tube (25) sensiblement sur toute sa longueur.

3. Échangeur thermique gaz d'échappement/agent réfrigérant suivant l'une des revendications 1 et 2,
**caractérisé en ce**
**que** des composants d'un appareil de chauffage auxiliaire (11) sont conformés sur le double tube de telle sorte que l'appareil de chauffage auxiliaire (11) peut être intégré au circuit d'agent réfrigérant sur la zone de sortie (29) du second tube (26), en amont ou en aval du réchauffeur de carburant (13).

4. Échangeur thermique gaz d'échappement/agent réfrigérant suivant l'une des revendications 1 à 3,
**caractérisé en ce**
**qu'**un raccord (31) pour une conduite d'agent réfrigérant (14) est conformé sur la zone de sortie (29) du second tube (26) ou sur la zone de sortie du réchauffeur de carburant (13).

5. Échangeur thermique gaz d'échappement/agent réfrigérant suivant l'une des revendications 1 à 4,
**caractérisé en ce**
**que** des composants d'un refroidisseur de carburant (6) sont conformés sur le double tube de telle sorte que le refroidisseur de carburant (6) peut être intégré au circuit d'agent réfrigérant sur la zone d'entrée (30) du second tube (26).

6. Échangeur thermique gaz d'échappement/agent réfrigérant suivant l'une des revendications 1 à 5,
**caractérisé en ce**
**que** des composants d'un filtre à gaz d'échappement (20) sont conformés sur le double tube de telle sorte que le filtre à gaz d'échappement (20) peut être intégré au recyclage des gaz d'échappement dans la zone d'entrée (30) du premier tube (25).

7. Véhicule automobile entraînable par un moteur à combustion interne comportant un échangeur thermique gaz d'échappement/agent réfrigérant (3) suivant la revendication (1).

8. Véhicule automobile suivant la revendication 7,
**caractérisé en ce**
**qu'**un appareil de chauffage auxiliaire (11) est disposé en aval de l'échangeur thermique gaz d'échappement/agent réfrigérant (3) et en amont du réchauffeur de carburant (13) dans le circuit d'agent réfrigérant.

9. Véhicule automobile suivant l'une des revendications 7 et 8,
**caractérisé en ce**
**qu'**un refroidisseur de carburant (6) est disposé en aval du moteur à combustion interne (1) et en amont du refroidisseur air/agent réfrigérant dans le circuit d'agent réfrigérant, le refroidisseur de carburant (6) étant raccordé à un retour de carburant, qui transporte du carburant excédentaire en direction du réservoir de carburant (8).

10. Véhicule automobile suivant la revendication 9,
**caractérisé en ce**
**que** le refroidisseur de carburant (6) est disposé en amont de l'échangeur thermique gaz d'échappement/agent réfrigérant (3) dans le circuit d'agent réfrigérant.

11. Véhicule automobile suivant l'une des revendications 9 et 10,
**caractérisé en ce**
**que** dans le circuit d'agent réfrigérant est prévu une dérivation (22) pontant le refroidisseur de carburant (6), qui comporte des moyens de régulation (21) par lesquels peut être réglé le débit d'un agent réfrigérant au travers du refroidisseur de carburant (6).

12. Véhicule automobile suivant la revendication 11,
**caractérisé en ce**
**qu'**un étranglement (21) et/ou un thermostat sont prévus comme moyens de régulation.

13. Véhicule automobile suivant les revendications 7 à 12,
**caractérisé en ce**
**que**, dans le circuit d'agent réfrigérant, l'agent réfrigérant traverse successivement au moins le moteur à combustion interne (1), le refroidisseur de carburant (6), l'échangeur thermique gaz d'échappement/agent réfrigérant (3), l'appareil de chauffage auxiliaire (11), et le réchauffeur de carburant (13).
